# EUROPÄISCHE PATENTSCHRIFT

(11) **EP 3 772 622 B1**
(45) Veröffentlichungstag und Bekanntmachung des Hinweises auf die Patenterteilung: **24.01.2024**
(21) Anmeldenummer: 20184851.2
(22) Anmeldetag: 09.07.2020
(51) Int. Cl.: F24D 3/18, F24D 19/00, F24D 19/10, F25B 25/00, F24F 11/41, F28B 9/00, F25B 30/02, F25B 49/00

(54) **SCHUTZ GEGEN ÜBERTRITT VON KÄLTEMITTEL IN EINEN HEIZKREISLAUF NACH SCHÄDEN DURCH GEFRIEREN VON WÄRMETRÄGERMEDIUM IN EINEM WÄRMEÜBERTRAGER**
PROTECTION AGAINST REFRIGERANT SPILLING INTO A HEATING CIRCUIT AFTER DAMAGE CAUSED BY FREEZING OF HEAT TRANSFER MEDIUM IN A HEAT EXCHANGER
PROTECTION CONTRE LE TRANSFERT DE RÉFRIGÉRANT DANS UN CIRCUIT DE CHAUFFAGE APRÈS DES DOMMAGES PAR CONGÉLATION DE FLUIDE CALOPORTEUR DANS UN ÉCHANGEUR DE CHALEUR

(30) Priorität: 09.08.2019 DE 102019121569
(43) Veröffentlichungstag der Anmeldung: 10.02.2021
(73) Patentinhaber: Vaillant GmbH, 42859 Remscheid (DE)
(72) Erfinder: Forner, Pascal, 42857 Remscheid (DE); Lis, Raimund, 42369 Wuppertal (DE); Muessener, Matthias, 42499 Hückeswagen (DE); Reckhaus, Birgit, 42859 Remscheid (DE); Hiegemann, Markus, 44791 Bochum (DE)
(74) Vertreter: Popp, Carsten

(56) Entgegenhaltungen:
- EP-A1- 2 149 758
- JP-A- 2003 240 343
- US-A1- 2012 273 184

## Beschreibung

Die Erfindung liegt auf dem Gebiet der Wärmepumpensysteme, die insbesondere zur Beheizung oder Kühlung von Wohngebäuden und/oder zur Warmwasserbereitung benutzt werden. Solche Wärmepumpensysteme benötigen zwei oder mehr Kreisläufe, von denen mindestens einer ein geschlossener Kreislauf (im Folgenden als Heizkreislauf bezeichnet) ist, der zumindest zum Teil im Inneren eines Gebäudes liegt und typischerweise im Wesentlichen mit Wasser oder Sole als Wärmeträgermedium betrieben wird. Über einen Wärmeübertrager findet meist ein Wärmeaustausch mit einem zweiten Kreislauf statt, der typischerweise mit einem Kältemittel betrieben wird. Bevorzugt werden natürliche Kältemittel eingesetzt, wobei es sich um brennbare Stoffe handeln kann. Ein solches Kältemittel ist beispielsweise unter der Bezeichnung R290 bekannt. Häufig werden Alkane, zu denen beispielsweise auch Propan gehört, als Kältemittel eingesetzt, da sie geeignete Eigenschaften bezüglich ihres Siedepunktes, Gefrierpunktes und der Wärmekapazität haben.

Bei Wärmetauschern zwischen verschiedenen Wärmeträgermedien, die möglicherweise auch noch unter unterschiedlichen Drücken vorliegen, ist es besonders wichtig, Folgen eventueller Leckagen gering zu halten und ein Eindringen von Kältemittel in einen Heizkreislauf zu vermeiden. Insbesondere im Fall von Wärmepumpensystemen ist es wünschenswert, bei Leckagen in einem Wärmeübertrager das Eindringen und den Transport von Kältemittel in einen Heizkreislauf zu vermeiden, insbesondere wenn es sich um das Eindringen von brennbarem Kältemittel handelt. Selbst geschlossene Kreisläufe sind nicht immer vollständig gasdicht gegenüber ihrer Umgebung oder weisen sogar Entgasungseinrichtungen auf. Da das Eindringen von brennbaren Gasen in Gebäude aus Sicherheitsgründen grundsätzlich vermieden werden soll, ist es wichtig, das unerwünschte Eindringen von Kältemittel zu verhindern.

Nach dem Stand der Technik gibt es verschiedene chemische oder physikalische Verfahren, Leckagen in einem Wärmetauscher und/oder das Eindringen von Fremdstoffen in einen geschlossenen Kreislauf festzustellen, die jedoch teilweise sehr aufwändig und/oder langsam und/oder unzuverlässig sind. Die Verwendung von Doppelwand-Wärmetauschern ist zwar möglich, aber mit Kosten und wärmetechnischen Nachteilen verbunden. Da als Hauptursache für Leckagen in den hier behandelten Wärmeübertragern ein Einfrieren gilt, bei dem durch Ausdehnung des Wärmeträgermediums im vereisten Bereich erhebliche mechanische Belastungen auftreten, ist es zunächst wichtig, Bedingungen, die ein Einfrieren erwarten lassen, zu erkennen und zu verhindern. Dafür sind verschiedene Verfahren und Vorrichtungen bekannt, beispielsweise aus der US 2012/0273184 A1, in der das rechtzeitige Ablassen von Wärmeträgermedium vor einem befürchteten Einfrieren beschrieben wird. Falls jedoch aus irgendwelchen Gründen das Ablassen von Wärmeträgermedium keine gewünschte Option ist und sich auf Grund besonderer Umstände ein Einfrieren nicht immer sicher verhindern lässt, ist es aus Sicherheitsgründen wichtig, auch die Situation eines unerwünschten Einfrierens des Wärmetauschers mit möglicher Leckage von Kältemittel in den Heizkreislauf sicher zu beherrschen und frühzeitig Maßnahmen zu ergreifen.

Hierzu schlägt die JP 2003 240343 A eine Wärmetauschereinrichtung vor, umfassend Mittel zur Ermittlung einer Temperatur der (Wärmeträger)flüssigkeit im Einlassweg zum Wärmetauscher, ein Absperrmittel im Einlassweg und ein Umschaltventil im Auslass des Wärmetauschers. Zwischen dem Umschaltventil und dem Wärmetauscher kann eine Fördereinrichtung angeordnet sein. Im Falle, dass eine zu niedrige Temperatur festgestellt wird, kann durch das Absperrmittel der Einlass des Wärmetauschers blockiert werden und ein Ablassen des Wärmeträgers durch Umschaltventil und Fördereinrichtung initiiert werden. Nachteilig ist diese Lösung technisch aufwendig und bei Stromausfall nicht funktional.

Aufgabe der vorliegenden Erfindung ist es daher, ein Verfahren und ein Wärmepumpensystem zu schaffen, die die Möglichkeit eines Einfrierens erkennen und insbesondere unabhängig von anderen Schritten zur Verhinderung des Einfrierens ohne aufwändige Maßnahmen am Wärmeübertrager eine kostengünstige, schnelle und zuverlässige Abschaltung eines Heizkreislaufes bewirken können. Insbesondere soll diese Funktion nicht von der Art der Installation der Anlage und/oder dem manuellen Eingreifen einer Person abhängig sein sowie auch bei Stromausfall und langfristig sicher funktionieren.

Zur Lösung dieser Aufgabe dienen ein Verfahren und ein Wärmepumpensystem gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit den Figuren, veranschaulicht die Erfindung und gibt weitere Ausführungsbeispiele an.

Die Erfindung geht davon aus, dass es eine seltene und im Normalbetrieb nicht vorkommende Situation ist, wenn ein Wärmeübertrager nahe an eine Temperatur kommt, bei der ein Wärmeträgermedium einfrieren und Schaden anrichten kann. Es geht daher nicht darum, diese Situation zu verhindern, was gegebenenfalls von anderen Komponenten und Regeleinrichtungen einer Wärmepumpenanlage übernommen wird, sondern im Sinne einer Sicherung bei dem unwahrscheinlichen Eintreten der ungewöhnlichen Situation einen Schutzmechanismus in Gang zu setzen, der eventuelle Folgeschäden eines Einfrierens zu vermeiden hilft. Ein in Teilaspekten vergleichbares Vorgehen gibt es bisher nur für zu hohe Temperaturen in einem Heizkreislauf. Dazu wird nach dem Stand der Technik ein sogenannter Sicherheitstemperaturbegrenzer (STB) eingesetzt, der bei Überschreiten einer Schwelltemperatur das System abschaltet oder gezielt abkühlt, um Schäden durch Überhitzung zu vermeiden. Allerdings dient dieses Vorgehen nach dem Stand der Technik tatsächlich der Vermeidung von Schäden, während die vorliegende Erfindung nicht bewirken will und kann, dass ein Einfrieren vermieden wird, sondern nur sicherstellt, dass eventuelle Schäden durch Einfrieren keine gefährlichen Folgen haben können.

Dazu dient das erfindungsgemäße Verfahren für ein Wärmepumpensystem zum Schutz gegen Übertritt von Kältemittel in einen laufenden Heizkreislauf mit einem flüssigen, wasserhaltigen Wärmeträgermedium auf Grund einer Leckage in Folge eines Gefrierens des Wärmeträgermediums in einem von dem Kältemittel und dem Wärmeträgermedium durchströmbaren Wärmeübertrager, bei dem die Temperatur des Wärmeübertragers oder des Wärmeträgermediums im Bereich des Wärmeübertragers festgestellt und bei Unterschreiten einer Schwelltemperatur eine Durchströmung des Wärmeübertragers mit Wärmeträgermedium verhindert wird, wodurch der Heizkreislauf gestoppt wird. Die Verhinderung der Durchströmung bewirkt nicht unbedingt, dass keine Vereisung eintritt. Es kann sogar das Gegenteil der Fall sein. In jedem Fall aber kann ohne Durchströmung des Wärmeübertragers auch im Fall eines Schadens mit Leckage von Kältemittel kein Transport von Kältemittel aus dem Wärmeübertrager heraus in den Heizkreislauf erfolgen, so dass auch bei Verwendung von brennbarem Kältemittel kein weiteres Risiko entsteht.

Bevorzugt erfolgt die Verhinderung der Durchströmung mittels einer Art Sicherheitstemperaturbegrenzer (STB), der auch bei Stromausfall bei zu niedrigen Temperaturen anspricht. Im vorliegenden Fall kann dieser zwar nicht die Temperatur nach unten begrenzen, wohl aber Folgeschäden bei einem Einfrieren des Wärmeübertragers vermeiden. Es können dabei einige typische Eigenschaften eines STB auch hier verwirklicht werden, wie sie bei Sicherheitseinrichtungen sinnvoll sind. So kann dafür gesorgt werden, dass Der STB funktioniert auch bei Ausfall einer Stromversorgung und schließt jedenfalls bei anderen Störungen von Komponenten. Auch kann das Rückgängigmachen eines Ansprechens des STB von bestimmten Kriterien, insbesondere einem manuellen Eingriff, abhängig gemacht werden.

Zum Feststellen der Temperatur und zum Verhindern der Durchströmung kann ein Thermostatventil in einem Einlass und/oder einem Auslass des Wärmeübertragers eingesetzt wird, welches bei Temperaturen unterhalb der Schwelltemperatur schließt. Solche Thermostatventile können rein mechanisch ausgelöst werden, so dass nicht einmal eine Abhängigkeit von elektronischen Sensoren oder einer Stromversorgung besteht. Bevorzugt können sie nur manuell wieder geöffnet und z. B. vorgespannt werden.

In einer besonderen Ausführungsform wird zusätzlich zur Feststellung der Temperatur mindestens ein Temperatursensor benutzt, abhängig von dessen Messwert mindestens ein Ventil in einem Einlass und/oder einem Auslass des Wärmeübertragers so angesteuert wird, dass es unterhalb des Schwellwertes geschlossen ist. Diese Ausgestaltung ist besonders flexibel einsetzbar, weil der Temperatursensor nicht an der gleichen Stelle angeordnet sein muss wie das Ventil.

Wenn als Wärmeträgermedium Wasser oder eine im Wesentlichen Wasser enthaltende Flüssigkeit verwendet wird, wird bevorzugt der Schwellwert 1 bis 5° C [Grad Celsius] oberhalb der Gefriertemperatur des Wassers bzw. der Flüssigkeit gewählt. Eine geeignete Wahl des Schwellwertes verringert Fehlabschaltungen, stellt aber den gewünschten Schutz sicher.

Dabei ist das Verfahren sicherheitsgerichtet ausgestaltet, wodurch ein Ansprechen auch bei Stromausfall oder Fehlfunktionen von Komponenten erfolgt und/oder eine Wiederinbetriebnahme nach Ansprechen nur manuell möglich ist. Bei dieser Ausgestaltung erfolgt eine Wiederinbetriebnahme des Heizkreislaufs typischerweise erst nach Überprüfung der Dichtigkeit des Wärmeübertragers durch Fachpersonal.

Ein erfindungsgemäßes Wärmepumpensystem mit einer Vorrichtung mit mindestens einem Absperrorgan zum Schutz gegen Übertritt von Kältemittel aus einem Heizkreislauf mit einem flüssigen, wasserhaltigen Wärmeträgermedium auf Grund einer Leckage in Folge eines Gefrierens des Wärmeträgermediums in einem von dem Kältemittel und dem Wärmeträgermedium durchströmbaren Wärmeübertrager, weist an dem Wärmeübertrager einen Einlass und einen Auslass für das Wärmeträgermedium auf und mindestens ein Absperrorgan, welches den Durchfluss von Wärmeträgermedium bei Unterschreiten einer Schwelltemperatur verhindert und den Heizkreislauf stoppt. Schon vor einem eventuellen Einfrieren des Wärmeübertragers oder von Teilen davon wird der Heizkreislauf gestoppt, so dass kein Kältemittel hineingelangen kann. Die Vorrichtung kann insbesondere so eingerichtet sein, dass diese bei Feststellung des Unterschreitens einer vorgegebenen bzw. ermittelten Schwelltemperatur das Absperrorgan (automatisch bzw. direkt) bedarfsgerecht betätigt oder ansteuert, wodurch (unmittelbar) der Durchfluss von Wärmeträgermedium verhindert und stoppt wird. Das Absperrorgan ist ein Element aus der folgenden Gruppe:
- Thermostatventil, welches bei Temperaturen oberhalb der Schwelltemperatur geöffnet ist und bei Erreichen der Schwelltemperatur schließt,
- ein Sicherheitstemperaturbegrenzer, der auch bei Stromausfall anspricht.

Ein Thermostatventil als Absperrorgan ist bei Temperaturen oberhalb der Schwelltemperatur geöffnet schließt und bei Erreichen der Schwelltemperatur. So etwas lässt sich rein mechanisch ohne elektrische Komponenten verwirklichen und ist nur wenig störanfällig.

Vorteilhaft ist es, im Bereich des Einlasses und im Bereich des Auslasses Thermostatventile anzuordnen, weil je nach Betriebsbedingungen (Heizungsbetrieb, Kühlbetrieb, Abtaubetrieb) die niedrigsten Temperaturen am Einlass oder am Auslass auftreten können. Schon das Ansprechen eines der Thermostatventile unterbricht die Strömung im Heizkreislauf.

Zusätzlich lässt sich dieser Gedanke auch durch einen ersten Temperatursensor im Bereich des Einlasses und einen zweiten Temperatursensor im Bereich des Auslasses unterstützen, wobei immer der niedrigere der beiden Messwerte verwendet wird.

Ein erstes Absperrorgan kann im Bereich des Einlasses und ein zweites Absperrorgan im Bereich des Auslasses angeordnet sein. Generell kann es nützlich sein, Absperrorgane im Einlass und im Auslass vorzusehen, um bei einer Leckage auch ein langsames Eindringen von Kältemittel (das meist unter höherem Druck steht als der Heizkreislauf) gänzlich zu vermeiden.

Zusätzlich kann das Absperrorgan auch eine Pumpe sein, insbesondere eine Umwälzpumpe der Heizkreislaufes, die in ausgeschaltetem Zustand eine Durchströmung verhindert. Dann genügt schon das Abschalten der Pumpe, um einen Transport von Kältemittel im Heizkreislauf zu verhindern. Dies ist sicherheitstechnisch besonders dann sinnvoll, wenn die Pumpe räumlich in der Nähe des Wärmeübertragers angeordnet ist und es keine Möglichkeiten einer fehlerhaften Installation dieser Komponente und ihrer Steuerung gibt.

Als wichtige Sicherheitseinrichtung sollte die Vorrichtung sicherheitsgerichtet ausgestaltet sein mit unterbrechungsfreier Stromversorgung und/oder Komponenten, die bei Fehlfunktion zur Verhinderung der Durchströmung führen. Hier sollten hohe Maßstäbe an die Sicherstellung der Funktionsfähigkeit angelegt werden.

Dazu dient auch eine Verriegelung, die bei Ansprechen der Vorrichtung und Verhinderung der Durchströmung nur manuell oder bei Vorliegen bestimmter Bedingungen wieder gelöst werden kann. So lässt sich sicherstellen, dass nach einem Störfall der Heizkreis nicht wieder automatisch seinen Betrieb ohne Überprüfung aufnimmt.

Ein schematisches Ausführungsbeispiel der Erfindung, auf das diese jedoch nicht beschränkt ist, und die Funktionsweise des erfindungsgemäßen Verfahrens werden nun anhand der Zeichnung detailliert erläutert. Es zeigt:

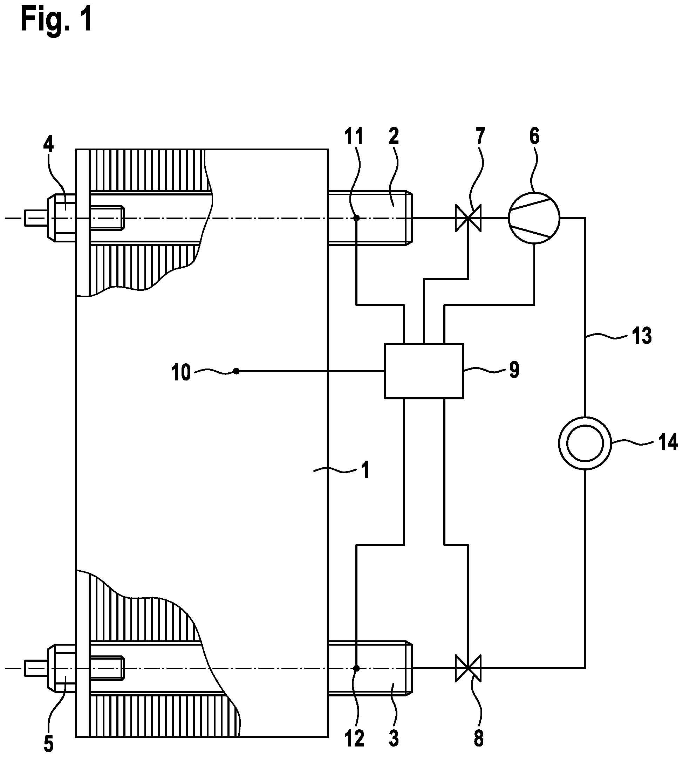

- Fig. 1:: schematisch einen Wärmeübertrager an einem Heizkreis mit der erfindungsgemäßen Ausstattung.

Figur 1 zeigt schematisch ein Ausführungsbeispiel einer hier vorgeschlagenen Vorrichtung. Ein Wärmeübertrager 1 mit einem Einlass 2 (Vorlauf) für Wärmeträgermedium und einem Auslass 3 (Rücklauf) ist Teil eines Heizkreislaufes 13 mit Heizgeräten 14. Der Wärmeübertrager 1 wird auch von einem Kältemittel, insbesondere einem brennbaren Kältemittel, z. B. R290, durchströmt. Um rechtzeitig vor einem eventuellen Einfrieren und damit der Möglichkeit einer Leckage in dem Wärmeübertrager 1 den Heizkreislauf vor dem Eindringen von Kältemittel zu schützen, ist der Wärmetauscher 1 mit einer zusätzlichen Sicherheitsausstattung versehen, die nach Art eines STB gestaltet sein kann, nur dass es hier um Maßnahmen bei zu niedriger Temperatur statt bei zu hoher Temperatur geht. Dazu kann der Wärmetauscher 1 mit einem Thermostatventil 4 im Bereich des Einlasses 2 und/oder mit einem Thermostatventil im Bereich des Auslasses 3 ausgestattet sein. Unter Thermostatventil wird hier ein mechanisches Ventil verstanden, welches aufgrund der Verformung oder Schrumpfung einer Komponente mit fallender Temperatur bei einer bestimmten Temperatur auslöst und den Einlass 2 bzw. den Auslass 3 oder den Heizkreislauf 13 an einer beliebigen anderen Stelle im Wärmetauscher 1 absperrt. Bevorzugt soll ein solches Thermostatventil nur manuell wieder geöffnet werden können.

Zusätzlich kann der Wärmetauscher 1 auch mit einem oder mehreren Temperatursensoren 10, 11, 12 ausgestattet sein, die mit einer zentralen Steuerung 9 verbunden sind und deren Messwerte auf Unterschreiten einer vorgebbaren Schwelltemperatur überwacht werden. Unterschreitet die Temperatur an einem Temperatursensor 10, 11, 12 die Schwelltemperatur, so wird der Heizkreislauf 13 abgesperrt, bevorzugt durch Schließen eines Ventils 7, 8 im Einlass 2 und /oder im Auslass 3 oder durch Abschalten einer Umwälzpumpe 6. Bevorzugt sind ein erster Temperatursensor 11 im Bereich des Einlasses 2 und ein zweiter Temperatursensor 12 im Bereich des Auslasses 3 angeordnet, so dass jeweils die niedrigere gemessene Temperatur als Kriterium für eine Absperrung des Heizkreises 13 durch mindestens eines der Absperrmittel 6, 7, 8 genutzt werden kann.

Die Erfindung stellt sicher, dass kein Kältemittel durch eine eventuelle Leckage nach Einfrieren eines Wärmeübertragers in einen Heizkreislauf gelangen kann.

### Bezugszeichenliste

- 1: Wärmeübertrager
- 2: Einlass
- 3: Auslass
- 4: erstes Thermostatventil
- 5: zweites Thermostatventil
- 6: Umwälzpumpe
- 7: Einlassventil
- 8: Auslassventil
- 9: Steuerung
- 10: Temperatursensor am Wärmeübertrager
- 11: Temperatursensor am Einlass
- 12: Temperatursensor am Auslass
- 13: Heizkreislauf
- 14: Heizgeräte

## Patentansprüche

1. Verfahren beim Betrieb eines Wärmepumpensystems zum Schutz gegen Übertritt von Kältemittel in einen laufenden Heizkreislauf (13) mit einem flüssigen, wasserhaltigen Wärmeträgermedium auf Grund einer Leckage in Folge eines Gefrierens des Wärmeträgermediums in einem von dem Kältemittel und dem Wärmeträgermedium durchströmbaren Wärmeübertrager (1), wobei eine Temperatur des Wärmeübertragers (1) oder des Wärmeträgermediums im Bereich des Wärmeübertragers (1) festgestellt und bei Unterschreiten einer Schwelltemperatur eine Durchströmung des Wärmeübertragers (1) mit Wärmeträgermedium verhindert wird, wodurch der Heizkreislauf (13) gestoppt wird, **dadurch gekennzeichnet, dass** die Durchströmung des Wärmeübertragers (1)
- bei Temperaturen unterhalb der Schwelltemperatur mittels eines Thermostatventils (4, 5) in einem Einlass (2) und/oder einem Auslass, und/oder
- mittels eines Sicherheitstemperaturbegrenzers, der auch bei Stromausfall anspricht verhindert wird.

2. Verfahren nach einem der vorhergehenden Ansprüche, wobei als Wärmeträgermedium Wasser oder eine im Wesentlichen Wasser enthaltende Flüssigkeit verwendet wird und der Schwellwert 1 bis 5° C [Grad Celsius] oberhalb der Gefriertemperatur des Wassers bzw. der Flüssigkeit gewählt wird.

3. Verfahren nach einem der vorhergehenden Ansprüche, wobei das Verfahren sicherheitsgerichtet ausgestaltet ist, wodurch ein Ansprechen auch bei Stromausfall oder Fehlfunktionen von Komponenten erfolgt und eine Wiederinbetriebnahme nach Ansprechen nur manuell möglich ist.

4. Wärmepumpensystem mit einer Vorrichtung mit mindestens einem Absperrorgan (4,5) zum Schutz gegen Übertritt von Kältemittel aus einem Heizkreislauf (13) mit einem flüssigen, wasserhaltigen Wärmeträgermedium auf Grund einer Leckage in Folge eines Gefrierens des Wärmeträgermediums in einem von dem Kältemittel und dem Wärmeträgermedium durchströmbaren Wärmeübertrager (1), wobei der Wärmeübertrager (1) einen Einlass (2) und einen Auslass (3) für das Wärmeträgermedium aufweist und mindestens ein Absperrorgan (4, 5), welches den Durchfluss von Wärmeträgermedium bei Unterschreiten einer Schwelltemperatur verhindert und den Heizkreislauf (13) stoppt, **dadurch gekennzeichnet, dass** das Absperrorgan (4, 5) ein Element aus der folgenden Gruppe ist:
- Thermostatventil, welches bei Temperaturen oberhalb der Schwelltemperatur geöffnet ist und bei Erreichen der Schwelltemperatur schließt, und/oder
- ein Sicherheitstemperaturbegrenzer, der auch bei Stromausfall anspricht.

5. Wärmepumpensystem nach Anspruch 4, wobei im Bereich des Einlasses (2) und im Bereich des Auslasses (3) Thermostatventile (4, 5) angeordnet sind.

6. Wärmepumpensystem nach einem der Ansprüche 4 oder 5, wobei die Vorrichtung sicherheitsgerichtet ausgestaltet ist mit unterbrechungsfreier Stromversorgung und/oder Komponenten, die bei Fehlfunktion zur Verhinderung der Durchströmung führen.

7. Wärmepumpensystem nach einem der Ansprüche 4 bis 6, wobei eine Verriegelung vorhanden ist, die bei Ansprechen der Vorrichtung und Verhinderung der Durchströmung nur manuell oder bei Vorliegen bestimmter Bedingungen wieder gelöst werden kann.

## Claims

1. Method, during operation of a heat pump system, for protecting against spilling of refrigerant into a running heating circuit (13) with a liquid, aqueous heat transfer medium, due to a leak as the result of freezing of the heat transfer medium in a heat exchanger (1) through which the refrigerant and the heat transfer medium can flow, wherein a temperature of the heat exchanger (1) or the heat transfer medium is established in the region of the heat exchanger (1) and should this temperature fall below a threshold temperature, the heat transfer medium is prevented from flowing through the heat exchanger (1), whereby the heating circuit (13) is stopped, **characterised in that** the flow through the heat exchanger (1) is prevented
- at temperatures below the threshold temperature by means of a thermostatic valve (4, 5) in an inlet (2) and/or an outlet, and/or
- by means of a safety temperature limiter, which responds even in the event of a power failure.

2. Method according to any one of the preceding claims, wherein water or a liquid substantially containing water is used as the heat transfer medium and the threshold value of 1 to 5° C [degrees Celsius] above the freezing temperature of water and/or the liquid is selected.

3. Method according to any one of the preceding claims, wherein the method is designed to be safety-oriented, whereby a response occurs even in the event of a power failure or malfunctions of components and only a manual restart following a response is possible.

4. Heat pump system having a device with at least one shut-off device (4, 5) for protecting against spilling of refrigerant from a heating circuit (13) with a liquid, aqueous heat transfer medium, due to a leak as the result of freezing of the heat transfer medium in a heat exchanger (1) through which the refrigerant and the heat transfer medium can flow, wherein the heat exchanger (1) has an inlet (2) and an outlet (3) for the heat transfer medium and at least one shut-off device (4, 5), which prevents the heat transfer medium from flowing through should the temperature fall below a threshold temperature and stops the heating circuit (13), **characterised in that** the shut-off device (4, 5) is an element from the following group:
- a thermostatic valve, which is opened at temperatures above the threshold temperature and closes when the threshold temperature is reached, and/or
- a safety temperature limiter, which responds even in the event of a power failure.

5. Heat pump system according to claim 4, wherein thermostatic valves (4, 5) are arranged in the region of the inlet (2) and in the region of the outlet (3).

6. Heat pump system according to any one of claims 4 or 5, wherein the device is designed to be safety-oriented with an uninterruptible power supply and/or components that, in the event of a malfunction, lead to prevention of the throughflow.

7. Heat pump system according to any one of claims 4 to 6, wherein there is a lock, which can only be released manually of if certain conditions are fulfilled when the device responds and the throughflow is prevented.

## Revendications

1. Procédé, lors du fonctionnement d'un système de pompe à chaleur, de protection contre le passage d'agent réfrigérant dans un circuit de chauffage (13) en marche avec un fluide caloporteur liquide contenant de l'eau en raison d'une fuite suite à la congélation du fluide caloporteur dans un échangeur de chaleur (1) qui peut être traversé par l'agent réfrigérant et le fluide caloporteur, dans lequel une température de l'échangeur de chaleur (1) ou du fluide caloporteur est constatée dans la zone de l'échangeur de chaleur (1) et si cette température devait descendre sous une température seuil, une traversée de l'échangeur de chaleur (1) par du fluide caloporteur est empêchée, selon lequel le circuit de chauffage (13) est mis à l'arrêt, **caractérisé en ce que** la traversée de l'échangeur de chaleur (1) est empêchée
- à des températures en dessous de la température seuil au moyen d'un robinet thermostatique (4, 5) dans une entrée (2) et/ou une sortie, et/ou
- au moyen d'un limiteur de température de sécurité qui répond également en cas de panne de courant.

2. Procédé selon l'une quelconque des revendications précédentes, dans lequel, en tant que fluide caloporteur, de l'eau ou un liquide contenant essentiellement de l'eau est utilisé et la valeur seuil est choisie de 1 à 5 °C [degrés Celsius] au-dessus de la température de congélation de l'eau ou du liquide.

3. Procédé selon l'une quelconque des revendications précédentes, dans lequel le procédé est conçu de manière sûre, selon lequel une réponse a lieu également en cas de panne de courant ou de dysfonctionnements de composants, et une remise en service après la réponse n'est possible que manuellement.

4. Système de pompe à chaleur avec un dispositif avec au moins un organe d'arrêt (4, 5) destiné à la protection contre le passage d'agent réfrigérant en provenance d'un circuit de chauffage (13) avec un fluide caloporteur liquide contenant de l'eau en raison d'une fuite à la suite d'une congélation du fluide caloporteur dans un échangeur de chaleur (1) pouvant être traversé par l'agent réfrigérant et le fluide caloporteur, dans lequel l'échangeur de chaleur (1) présente une entrée (2) et une sortie (3) pour le fluide caloporteur et au moins un organe d'arrêt (4, 5) qui empêche le passage de fluide caloporteur si la température devait descendre sous une température seuil et met à l'arrêt le circuit de chauffage (13), **caractérisé en ce que** l'organe d'arrêt (4, 5) est un élément du groupe suivant :
- un robinet thermostatique qui est ouvert lorsque des températures sont supérieures à la température seuil et se ferme lorsque la température seuil est atteinte, et/ou
- un limiteur de température de sécurité qui répond également en cas de panne de courant.

5. Système de pompe à chaleur selon la revendication 4, dans lequel des robinets thermostatiques (4, 5) sont disposés dans la zone de l'entrée (2) et dans la zone de la sortie (3).

6. Système de pompe à chaleur selon l'une quelconque des revendications 4 ou 5, dans lequel le dispositif est conçu de manière sûre avec une alimentation électrique à fonctionnement continu et/ou des composants qui permettent d'empêcher la traversée en cas de dysfonctionnement.

7. Système de pompe à chaleur selon l'une quelconque des revendications 4 à 6, dans lequel un verrouillage est présent qui ne peut être défait que manuellement ou en présence de certaines conditions lorsque le dispositif répond ou que la traversée est empêchée.
